Europäisches Patentamt

European Patent Office

Office européen des brevets

(11) Veröffentlichungsnummer: **0 601 424 A2**

## (12) EUROPÄISCHE PATENTANMELDUNG

(21) Anmeldenummer: **93119147.2**

(22) Anmeldetag: **27.11.93**

(51) Int. Cl.5: **G06F 11/20**, G06F 11/22

(30) Priorität: **09.12.92 DE 4241319**

(43) Veröffentlichungstag der Anmeldung:
**15.06.94 Patentblatt 94/24**

(84) Benannte Vertragsstaaten:
**AT CH ES GB IT LI**

(71) Anmelder: **ANT Nachrichtentechnik GmbH
Gerberstrasse 33
D-71522 Backnang(DE)**

(72) Erfinder: **Harbich, Thomas, Dr. rer. nat.
Am Brüdenrain 18
D-71554 Weissach i.T.(DE)**
Erfinder: **Hasler, Joachim, Dipl.-Ing. (BA)
Gertrud-Bäumer-Weg 33
D-71522 Backnang(DE)**
Erfinder: **Kuhn, Peter, Dipl.-Phys.
Industriestrasse 25
D-71522 Backnang(DE)**

(54) **Rechnersystem.**

(57) Rechnersystem mit wenigstens zwei Rechnereinheiten, wobei das Rechnersystem mit wenigstens einem Mittel zur Erkennung von fehlerhaften Zuständen der Rechnereinheiten ausgestattet ist und wobei die Erkennung von fehlerhaften Zuständen bei einem aktiven Rechensystem diesem die Aktivität entzogen und einer anderen intakten stand-by Rechnereinheit zugeteilt wird, dadurch gekennzeichnet, daß als Mittel zur Überwachung und Erkennung von fehlerhaften Zuständen bei den einzelnen Rechnereinheiten eine autarke Diagnoserechnereinheit vorgesehen ist,
daß bei Erkennung eines fehlerhaften Zustandes bei einer aktiven Rechnereinheit diese Diagnoserechnereinheit entscheidet, auf welche andere Rechnereinheit die Aktivität umgeschaltet wird, und daß mittels einer hoch zuverlässigen Hardware-Komponente stets genau eine Rechnereinheit als aktive Rechnereinheit selektiert wird.
   Rechnersystem mit einer sehr hohen Verfügbarkeit bei minimalem Hardwareaufwand.

Fig. 1

Die Erfindung bezieht sich auf ein Rechnersystem gemäß Oberbegriff des Anspruches 1.

Solche Rechnersysteme sind bekannt, beispielsweise durch die deutsche Offenlegungsschrift DE 40 04 709 A1. Bei diesem System ist zur gegenseitigen Überwachung der beiden Prozessoren jeder Prozessor mit einem sogenannten Watch-Dog ausgestattet, der an den jeweils anderen Rechner Kontrollsignale abgibt, anhand derer der jeweils andere Rechner die Funktionsfähigkeit des das Kontrollsignal aussendenden Rechners überprüfen kann. Nachteilig ist bei einem solchen System der hohe Hardwareaufwand, aber auch ein hoher Softwareaufwand und eine relativ geringe Verfügbarkeit. Eine höhere Verfügbarkeit erbringt ein zwei-vondrei-Rechnersystem, was jedoch mit einem sehr hohen Hardware- und Softwareaufwand bezahlt werden muß.

Der vorliegenden Erfindung lag die Aufgabe zugrunde, ein Rechnersystem der eingangs genannten Art anzugeben, welches eine sehr hohe Systemverfügbarkeit bei gleichzeitig relativ geringem Hardware- und Softwareaufwand erzielt.

Die Lösung dieser Aufgabe wird mit den Mitteln des Patentanspruches 1 erreicht. Vorteilhafte Ausgestaltungen ergeben sich durch die Unteransprüche.

Das erfindungsgemäße 1-aus-n-Rechnersystem weist eine sehr hohe Verfügbarkeit bei gleichzeitig geringen Hardwarekosten auf. Dies wird dadurch erreicht, daß der stets vorhandene lineare Anteil der Systemunverfügbarkeit (es ist immer eine einzige Instanz, welche die Auswahl trifft) minimiert wird. Insbesondere ist das Ausführungsbeispiel 1-von-2-Rechnersystem sehr wirtschaftlich, da die aufwendigeren Rechnereinheiten nur zweifach vorhanden sind und der Diagnoserechner als Single-Chip-Prozessor sehr preiswert ist.

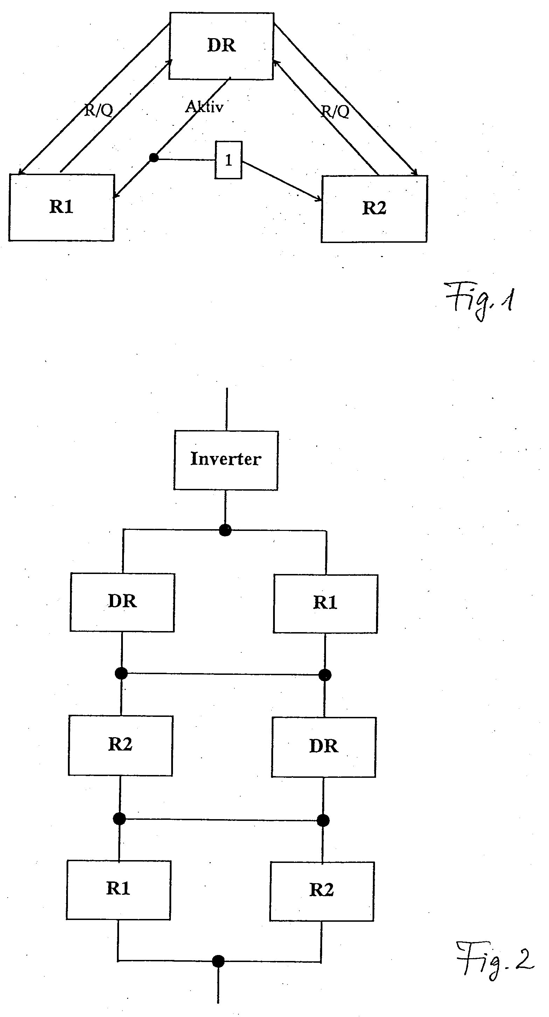

Es folgt nun die Beschreibung der Erfindung anhand der Figuren. Die Figur 1 zeigt ein 1 von 2 - Rechnersystem als Blockschaltbild.

Die Figur 2 zeigt ein Ersatzschaltbild zur Errechnung der Verfügbarkeit.

Die Figur 1 zeigt zuoberst den Diagnoserechner DR, der mit den beiden Rechnereinheiten R1 und R2 jeweils über eine Leitung Report R und eine Rückleitung Quittierung Q verbunden ist. Hauptsächliche Aufgabe des Diagnoserechners ist die Auswahl der aktiven Rechnereinheit. Würde man den beiden Rechnereinheiten selbst die Arbitrierung überlassen, so bestünde die Gefahr, daß eine defekte Rechnereinheit die Kontrolle nicht abgibt oder die Kontrolle fälschlich erzwingt.

Ferner ist eine Aktivierungsleitung gezeichnet, die vom Diagnoserechner DR zum linken Rechner R1 führt. An diese Aktivierungsleitung aktiv ist ein Inverter 1 angeschlossen, dessen Ausgang zum In-/Aktivierungseingang des rechten Rechners R2 führt. Dieser Inverter stellt sicher, daß stets genau eine Rechnereinheit aktiv ist. Prinzipiell bestünde die Möglichkeit, unter Verwendung von im Diagnoserechner vorhandener (unterschiedlicher) Ports die Aktivierung zu steuern. Ein defekter Diagnoserechner könnte dann aber beide Rechnereinheiten oder keine Rechnereinheit selektieren. Wie unten rechnerisch nachgewiesen wird, bedingt gerade die isolierte Inverterschaltung die hohe Unverfügbarkeit des beschriebenen Systems.

Im Falle von mehr als zwei zueinander redundanten Rechnereinheiten sorgt an Stelle des Inverters eine einfache Logikschaltung dafür, daß stets genau eine Rechnereinheit aktiv ist.

Beide Rechnereinheiten R1, R2 senden laufend die Ergebnisse ihrer eigenen Selbsttests zum Diagnoserechner, welcher diese quittiert (R/Q-Schnittstelle). Die Ergebnisse werden durch den Diagnoserechner bewertet, welcher auf den jeweils intakten (besseren) Rechner umschaltet und zwar über die schon erwähnte Aktiv-Leitung. Das Umschalten geschieht entweder dadurch, daß durch das Setzen bzw. Rücksetzen der Aktivleitung genau der defekte Rechner von seiner Außenwelt isoliert wird, indem die Treiberbausteine an allen äußeren Schnittstellen hochohmig geschaltet werden, oder daß der defekte Rechner selbst angehalten wird. Gemäß Figur 2 ergibt sich die gesamte Unzuverlässigkeit bzw. Gesamtunverfügbarkeit zu

$$U \text{ gesamt} = Ui \text{ Inverter} + Udr * Ur1 + Udr * Ur2 + Ur1 * Ur2 - Ur1 * Ur2 * Udr - Ui * Ur1 * Ur2 - Ui * Ur1 * Udr - Ui * Ur2 * Udr - Ui * Ur1 * Ur2 * Udr$$

| | |
|---|---|
| $Ui$: | Komponentenunverfügbarkeit des Inverters |
| $Ur1$: | Komponentenunverfügbarkeit der ersten Rechnereinheit |
| $Ur2$: | Komponentenunverfügbarkeit der zweiten Rechnereinheit |
| $Udr$: | Komponentenunverfügbarkeit des Diagnoserechners |

Unter den Voraussetzungen

$$Ur1 = Ur2 = Ur \text{ und } Udr \ll Ur \text{ sowie } 0 < Ur \ll 1$$

ergibt sich die unter praktischen Gesichtspunkten nur zu betrachtendende Gesamtunverfügbarkeit zu:

$$U\text{gesamt} = Ui + Ur^2$$

Der lineare Anteil der Systemunverfügbarkeit und damit der bestimmende Faktor besteht, wie auch obige Gleichung zeigt, im wesentlichen aus dem Inverter (ein Gatter), welches die Aktivleitung invertiert. Bei Betrachtung eines Einzelausfalls führt somit selbst ein Ausfall des Diagnoserechners nicht zu einem Systemausfall, da dann zwangsläufig ein intakter Rechner aktiviert bleibt oder wird. Das ist die zentrale Idee der Erfindung.

Als Redundanzmanager RM sei derjenige Teil der Software in den Rechnereinheiten bezeichnet, dem die Aufgabe zukommt, den Diagnoserechner mit den Informationen zu versorgen, die eine Überwachung der beiden Rechnereinheiten durch den Diagnoserechner ermöglichen. Zudem überwacht der Redundanzmanager die Nachrichten, welche vom Diagnoserechner an die Rechnereinheit gesendet werden, sodaß eine gegenseitige Kontrolle von Diagnoserechner und Rechnereinheit stattfindet. Eine weitere Aufgabe des Redundanzmanagers ist es, die Voraussetzungen zu schaffen, um eine geordnete Umschaltung von der aktiven Rechnereinheit auf die Stand-By-Rechnereinheit zu ermöglichen. Dazu muß auf beiden Rechnereinheiten die Applikationssoftware auf die Umschaltung vorbereitet werden. Die Umschaltvorbereitung, die eigentliche Umschaltung durch den Diagnoserechner und das anschließende erneute Aufsetzen der beiden Rechnereinheiten laufen ohne externe Kontrolle selbsttätig ab.

Die Kommunikation zwischen Diagnoserechner und Rechnereinheit erfolgt auf der Applikationsebene zwischen der Diagnoserechnersoftware und dem Redundanzmanager. Es werden hierbei laufend Nachrichtenrahmen ausgetauscht, nämlich Nachrichtenrahmen, die von einer Rechnereinheit an den Diagnoserechner gesendet werden, Reports, auf der Leitung R und Nachrichtenrahmen vom Diagnoserechner an eine Rechnereinheit, Quittung genannt, auf Leitung Q. Sowohl der aktive als auch der stand-by Redundanzmanager senden zyklisch Reports an den Diagnoserechner, worin Informationen über Selbsttestergebnisse, Befehle an den Diagnoserechner und Zustände der Rechnereinheit enthalten sind. Diese Informationen werden durch die Diagnoserechnersoftware ausgewertet und mit einer Quittung an den jeweiligen Redundanzmanager beantwortet. In dieser Quittung sind analog zum Inhalt eines RM-Reports Selbsttestergebnisse des Diagnoserechners und Befehle an den Redundanzmanager enthalten. In Systemen, in denen Übertragungsfehler zwischen Diagnoserechner und Rechnereinheiten nicht ausgeschlossen werden können, ist die Kommunikation zwischen diesen Kommunikationspartnern durch ein Schicht2-Protokoll zu sichern. Zusätzlich werden sowohl die Reports im Diagnoserechner als auch die Quittungen in der Rechnereinheit auf deren Plausibilität überprüft. Ist der Inhalt eines Reports nicht korrekt, so wird dies als Fehler der Rechnereinheit interpretiert. Eventuell werden vom Diagnoserechner geeignete Fehlerbehandlungsmaßnahmen eingeleitet. Auftretende inkorrekte Quittungsinhalte werden vom Redundanzmanager als Fehler des Diagnoserechners eingestuft. Auch der Diagnoserechner wird überwacht, indem mit der Quittung des Diagnoserechners dessen Selbsttestergebnisse an den Redundanzmanager übertragen werden. Aufgabe des Redundanzmanager ist es, diese Ergebnisse auszuwerten und im Fehlerfall gegebenenfalls Alarmmeldungen auszugeben. Dies wird auch dann durchgeführt, wenn nicht plausible Quittungen empfangen werden. Dadurch werden Wartungsmaßnahmen am Diagnoserechner ermöglicht.

Zur Umschaltung einer Rechnereinheit RE kommt es in den Fällen erstens aufgrund eines externen Kommandos von Seiten des Wartungspersonals oder aufgrund eines Fehlers des aktiven Rechners. Allein der Diagnoserechner kann die Zustände der Aktivierungsleitung zu den beiden Rechnereinheiten setzen und verändern.

Bei einer geordneten Umschaltung findet ein kontrollierter Übergang der Aktivitäten von der aktiven Rechnereinheit auf die stand-by-Rechnereinheit statt, die dann ihrerseits aktiv wird. Der grobe zeitliche Ablauf einer Umschaltung aus der Sicht des Redundanzmanagers kann wie folgt skizziert werden:

1. Eintreffen eines Umschaltkommandos

2. Umschaltvorbereitungsphase der passiven Rechnereinheit

3. Umschaltvorbereitungsphase beim aktiven Rechner

4. Schalten des Zustandes der Rechnereinheit - Aktivleitung auf beiden Rechnereinheiten durch den Diagnoserechner

5. Umschaltnachbereitungsphase auf beiden Rechnereinheiten RE Eine vom Diagnoserechner DR erzwungene Umschaltung (Panic switchover) wird nicht durch einen abrupten Systemübergang realisiert, sondern findet wenn irgend möglich geordnet statt. Die erzwungene Umschaltung auf die redundante Rechnereinheit ist dadurch charakterisiert, daß sie einzig vom Diagnoserechner genau dann initiiert wird, wenn der Diagnoserechner aufgrund eines Reports einen Fehler beim aktiven Rechner festgestellt hat. Voraussetzung für den Diagnoserechner ist, daß der passive Rechner korrekte Reports sendet und die Umschaltvorbereitung durch seinen Redundanzmanager stattgefunden hat. Anschließend wird analog zur geordneten Umschaltung vom Diagnoserechner versucht, die defekte Rechnereinheit zu einer geordneten Abgabe ihrer Aktivitäten zu bewegen. Findet die Abgabe der Aktivitäten auf der defekten Rechnereinheit noch in einer vom Diagnoserechner gesetzten (time-out)-Zeitspanne statt, so ist damit eine geordnete Umschaltung durchgeführt. Im allgemeinen kann jedoch nicht davon ausgegangen werden, daß eine defekte Rechnereinheit innerhalb der vorgegebenen Zeitspanne eine Bestätigung über eine korrekte Vorbereitung an den Diagnoserechner sendet. In diesem Fall schaltet dieser nach 'time-out' selbsttätig um.

Mit dem Report einer Rechnereinheit wird ein in den Selbsttests erkannter Fehler der Rechnereinheit dem Diagnoserechner angezeigt. Dazu müssen die Ergebnisse der Selbsttests in den Report eingebunden werden. Diese Selbsttests werden zyklisch von einer auf der Recheneinheit implementierten Diagnosesoftware (Diagnosemanager) durchgeführt und ihre Ergebnisse regelmäßig in einer definierten Periode an den Redundanzmanager übermittelt.

Zur Überprüfung der Funktionsfähigkeit des Diagnosemanagers und der Kommunikation zwischen Diagnosemanager und Redundanzmanager wird das Eintreffen der Nachrichten des Diagnosemanagers auf Regelmäßigkeit zeitlich überwacht.

Es ist noch zu bemerken, daß seitens des Diagnoserechners gewährleistet sein muß, daß das gemeinsame Umschalten der beiden Rechnereinheiten-Aktivleitungen atomar erfolgt, d.h., daß ein zeitliches Auseinanderdriften der beiden Schaltzeitpunkte zwischen dem aktiven und dem passiven Rechner ausgeschlossen sein muß.

Zur Funktionalität zwischen Redundanz- und Diagnosemanager ist noch folgendes zu bemerken: Die funktionalen Eigenschaften zwischen Redundanzmanager und Diagnosemanager sind sowohl für den aktiven als auch für den passiven Rechner identisch. Der Redundanzmanager nimmt keine Bewertung der Diagnoseergebnisse vor. Dies geschieht ausschließlich im Diagnoserechner. Nach dem Systemstart sendet der Diagnosemanager einen vollständigen Satz der Selbsttests bzw. Diagnoseergebnisse (power-up diagnostics) an den Redundanzmanager. Der Diagnosemanager sendet zyklisch die Diagnoseergebnisse der jeweiligen Rechnereinheit an den entsprechenden Redundanzmanager. Diese Ergebnisse werden geschlossen gesendet und anschließend vom Redundanzmanager in die Reports eingebunden und unbesehen an den Diagnoserechner durchgereicht. Die Kommunikation zwischen Diagnose und Redundanzmanager wird zeitlich überwacht, d.h. wird in einer vorgegebenen Zeitspanne kein Report empfangen, so wird ein Fehler des Diagnosemanagers angenommen und der Diagnoserechner entsprechend informiert.

**Patentansprüche**

1.  Rechnersystem mit wenigstens zwei Rechnereinheiten, zu wobei das Rechnersystem mit wenigstens einem Mittel zur Erkennung von fehlerhaften Zuständen der Rechnereinheiten ausgestattet ist und wobei die Erkennung von fehlerhaften Zuständen bei einem aktiven Rechensystem diesem die Aktivität entzogen und einer anderen intakten stand-by Rechnereinheit zugeteilt wird, dadurch gekennzeichnet, daß als Mittel zur Überwachung und Erkennung von fehlerhaften Zuständen bei den einzelnen Rechnereinheiten eine autarke Diagnose-Rechnereinheit vorgesehen ist, daß bei Erkennung eines fehlerhaften Zustandes bei einer aktiven Rechnereinheit diese Diagnoserechnereinheit entscheidet, auf welche andere Rechnereinheit die Aktivität umgeschaltet wird und daß mittels einer hoch zuverlässigen Logikschaltung stets genau eine Rechnereinheit als aktive Rechnereinheit selektiert wird.

2.  Rechnersystem nach Anspruch 1, dadurch gekennzeichnet, daß die Erkennung von fehlerhaften Zuständen bei einer Rechnereinheit von der Diagnoserechnereinheit als Alarm an eine übergeordnete Stelle gemeldet wird.

3.  Rechnersystem nach einem der vorhergehenden Ansprüche, dadurch gekennzeichnet, daß für Prüfzwecke und Wartungsmaßnahmen die Diagnoserechnereinheit eine manuelle Umschaltung der Aktivität von einer Rechnereinheit auf eine andere ermöglicht.

4.  Rechnersystem nach einem der vorhergehenden Ansprüche, dadurch gekennzeichnet, daß die zur Erkennung von fehlerhaften Zuständen erforderlichen Informationen (Report) von den einzelnen Rechnereinheiten jeweils über eine Leitung an die Diagnoserechnereinheit übertragen wird.

5.  Rechnersystem nach Anspruch 4, dadurch gekennzeichnet, daß die Diagnoserechnereinheit mit den einzelnen Rechnereinheiten jeweils über eine Leitung verbunden ist, über die die empfangenen Informationen (Report R) von der Diagnoserechnereinheit quittiert (Quittung Q) wird.

6.  Rechnersystem nach einem der vorhergehenden Ansprüche, dadurch gekennzeichnet, daß die Diagnoserechnereinheit mit den einzelnen Rechnereinheiten jeweils über eine Leitung verbunden ist, über die eine Rechnereinheit aktivierbar ist.

7.  Rechnersystem nach Anspruch 6, mit zwei Rechnereinheiten, dadurch gekennzeichnet, daß zur Selektion des aktiven Rechners als Logikschaltung ein Inverter eingesetzt wird, der in die eine Aktivierungsleitung eingefügt ist.

8. Rechnersystem nach einem der vorhergehenden Ansprüche, dadurch gekennzeichnet, daß die Rechnereinheiten über wenigstens ein Leitungssystem zum Austausch von Daten miteinander verbunden sind.

9. Rechnersystem nach einem der vorherghenden Ansprüche, dadurch gekennzeichnet, daß die Diagnoserechnereinheit ein Single-Chip-Mikroprozessor ist.

Fig.1

Fig.2